# EUROPÄISCHE PATENTSCHRIFT

(11) **EP 1 984 213 B1**
(45) Veröffentlichungstag und Bekanntmachung des Hinweises auf die Patenterteilung: **24.08.2011**
(21) Anmeldenummer: 06841174.3
(22) Anmeldetag: 27.12.2006
(51) Int. Cl.: B60R 19/48

(54) **SENSORHALTERUNG, INSBESONDERE ZUR HALTERUNG VON ABSTANDSSENSOREN AN FAHRZEUGTEILEN**
SENSOR MOUNT, IN PARTICULAR FOR MOUNTING INTER-VEHICLE DISTANCE SENSORS ON VEHICLE COMPONENTS
SUPPORT DE CAPTEUR, NOTAMMENT POUR MAINTENIR DES CAPTEURS D'ESPACEMENT SUR DES PARTIES DE VEHICULE

(30) Priorität: 14.02.2006 DE 102006007710
(43) Veröffentlichungstag der Anmeldung: 29.10.2008
(73) Patentinhaber: Valeo Schalter und Sensoren GmbH, 74321 Bietigheim-Bissingen (DE)
(72) Erfinder: THEML, Ingrid, 74321 Bietigheim-Bissingen (DE); EIDEL, Oliver, 71696 Möglingen (DE)
(74) Vertreter: Pothmann, Karsten
(86) Internationale Anmeldenummer: PCT/EP2006/012547
(87) Internationale Veröffentlichungsnummer: WO 2007/093214

(56) Entgegenhaltungen:
- EP-A- 1 221 689
- EP-A1- 1 577 169
- DE-A1- 10 314 862
- US-A1- 2003 160 687

## Beschreibung

Die Erfindung betrifft eine Sensorhalterung, insbesondere zur Halterung von Abstandssensoren an Fahrzeugteilen, mit einer insbesondere hülsenartig ausgebildeten Aufnahme für einen Sensor, wobei die Aufnahme eine axial vordere Seite, in deren Bereich sich bei einem in die Halterung eingesetzten Sensor die aktive Fläche des Sensors befindet und eine der vorderen Seite abgewandte hintere Seite aufweist. Als zu halternde Sensoren kommen insbesondere Ultraschall- oder Radarsensoren zur Erfassung der Umgebung eines Fahrzeugs in Betracht. Die Halterungen dienen vorzugsweise zur Anbringung der Sensoren an entsprechenden Fahrzeugteilen und insbesondere an Stoßfängern. Die Fahrzeugteile sowie die Halterungen können dabei aus Kunststoff sein.

Solche Sensorhalterungen sind beispielsweise aus der WO99/10876 A1 vorbekannt.

Die EP 1 577 169 A1 zeigt einen gattungsgemäßen Sensorhalter an einem Stoßfänger eines Kraftfahrzeuges, wobei der Sensorhalter einen klappbaren Haltebügel aufweist.

Ferner zeigt die DE 103 14 862 A1 eine Sensoranordnung mit einem Halter, in welchen ein Sensor verrastbar ist.

In der US 2003 0160687 A1 ist ein Rückfahrsensor mit einem zylindrischen Gehäuse beschrieben, welches in oder an einem Stoßfänger angeordnet werden kann.

Beim Betrieb der in die bekannten Sensorhaltungen eingesetzten Sensoren hat sich herausgestellt, dass es hin und wieder zu von den Sensoren empfangenden Störsignalen kommt. Der vorliegenden Erfindung liegt die Aufgabe zugrunde, eine Sensorhalterung bereitzustellen, bei der das Auftreten von Störsignalen möglichst minimiert wird.

Diese Aufgabe wird durch eine Sensorhalterung gemäß Anspruch 1 gelöst.

Der Erfindung liegt die Erkenntnis zugrunde, dass die in den Sensorhalterungen gehalterten Sensoren auch in die hintere Richtung abstrahlen beziehungsweise dass von der hinteren Richtung kommend unerwünschte Reflexionssignale von der aktiven Fläche des Sensors empfangen werden. Derartige, nach hinten abgestrahlte Signale, beziehungsweise von hinten kommende Reflexionssignale, sollen möglichst nicht ausgesendet beziehungsweise empfangen werden. Um das Aussenden von Signalen in die hintere Richtung zu vermeiden und/oder um von hinten kommende Signale abzudämpfen, weist der erfindungsgemäße Sensorhalter auf der hinteren Seite der Aufnahme eine Abdeckung auf.

Bei der erfindungsgemäßen Sensorhalterung kann folglich der Sensor von axial hinten in die Sensorhalterung beziehungsweise in die Aufnahme der Sensorhalterung eingeführt werden. Nachdem der Sensor seine Endmontageposition erreicht hat, kann mit der an der Halterung beweglich angeordneten Abdeckung die hintere Seite der Aufnahme verschlossen oder abgedeckt werden.

Die Abdeckung kann dabei beispielsweise mittels eines elastisch nachgiebigen Verbindungselements an der Aufnahme angeordnet sein, wobei das Verbindungselement an die Aufnahme und/oder an die Abdeckung angeformt sein kann. Erfindungsgemäß ist dabei denkbar, dass das Verbindungselement weder an die Abdeckung noch an die Aufnahme angeformt ist; es ist dann vorteilhafterweise an den einzelnen Teilen jeweils befestigt.

Die Abdeckung kann insbesondere mittels eines Scharniers, insbesondere mittels eines Filmscharniers, schwenkbar an der Aufnahme angeordnet sein. Das Filmscharnier kann dabei, wie bereits erwähnt, beispielsweise an die Abdeckung und/oder an die Aufnahme angeformt sein.

Das Verbindungselement kann zudem wenigstens ein freies Ende aufweisen, an dem Hinterrastmittel zur rastenden Verbindung mit einem Rasteingriffsabschnitt an der Aufnahme und/oder der Abdeckung vorgesehen sind. Dies hat den Vorteil, dass eine Verbindung des Verbindungselements mit der Aufnahme und/oder mit der Abdeckung auf einfache Art und Weise realisierbar ist. Dennoch wird eine funktionssichere Verliersicherung der Abdeckung in einer Vormontageposition, in der die Abdeckung die hintere Seite der Aufnahme nicht verschließt, gewährleistet.

Gemäß der Erfindung kann ferner vorteilhafterweise vorgesehen sein, dass an der Abdeckung und/oder an der Aufnahme Befestigungsmittel zum dauerhaften Befestigen der Abdeckung auf der hinteren Seite der Aufnahme vorgesehen sind. Die Befestigungsmittel dienen folglich zur Befestigung des Deckels in seiner Endmontagelage, wenn der Sensor in der Sensoraufnahme angeordnet ist. Die Abdeckung verschließt dann die hintere Seite der Aufnahme. Durch eine geeignete Befestigung der Abdeckung an der Hinterseite der Aufnahme kann zudem der Sensor verliersicher in der Halterung angeordnet werden. Andere Befestigungsmittel des Sensors zur Befestigung des Sensors in der Halterung können damit entfallen.

Vorteilhafterweise kann ferner vorgesehen sein, dass die Abdeckung unter axialer Vorspannung an der Aufnahme angeordnet ist. Hierdurch kann zwischen der Abdeckung und der Aufnahme eine gewisse Dichtfunktion gewährleistet werden. Es kann beispielsweise unterbunden werden, dass Schmutz oder Feuchtigkeit in den Raum zwischen dem Sensor und der Halterung eindringen kann. Zudem kann bewirkt werden, dass der Sensor unter einer axialen Vorspannung in der Halterung gehalten wird.

Die Aufnahme kann an der hinteren Seite wenigstens zwei in axialer Richtung weisende Vorsprünge vorsehen, die die Befestigungsmittel zur Anordnung der Abdeckung an der hinteren Seite der Aufnahme umfassen. Hierdurch kann ein positionsgenaues Aufsetzen der Abdeckung auf die hintere Seite der Aufnahme erreicht werden.

Die Befestigungsmittel sind dabei vorteilhafterweise als lösbare oder unlösbare Rastmittel ausgebildet. Das Vorsehen von lösbaren Rastmitteln hat den Vorteil, dass der in der Halterung angeordnete Sensor entnommen und ausgetauscht werden kann.

Die Aufnahme selber ist vorteilhafterweise an einem Befestigungsabschnitt der Halterung angeordnet, welcher insbesondere an einem Fahrzeugteil befestigt werden kann. Denkbar ist erfindungsgemäß auch, dass die Halterung als solche einstückig an einem Fahrzeugteil befestigt ist. Insbesondere kann die Aufnahme einstückig an einem aus Kunststoff hergestelltes Fahrzeugteil angeformt sein.

Gemäß einer weiteren vorteilhaften Ausgestaltung der Erfindung ist die Mantelfläche der Aufnahme im Wesentlichen geschlossen. Hierdurch wird unterbunden, dass vom Sensor ausgesendete Sensorsignale die Halterung seitlich verlassen beziehungsweise dass aus seitlichen Richtungen, Reflexionssignale den Sensor erreichen können. Auch hierdurch wird das Messergebnis des Sensors nicht negativ beeinträchtigt.

Die Mantelfläche der Aufnahme kann allerdings eine sich in radiale Richtung erstreckende Aussparung für einen

Anschlussabschnitt des Sensors aufweisen. Dieser Anschlussabschnitt des Sensors ragt dann, wenn der Sensor in die Halterung eingesetzt ist, in radialer Richtung durch die Aussparung. Die elektrische Kontaktierung des.Sensors kann dann seitlich neben der Aufnahme erfolgen.

Die Abdeckung als solche kann wenigstens abschnittsweise einen umlaufenden Anlagesteg zur Anlage an die freie Stirnseite der Aufnahme aufweisen. Hierdurch werden definierte Anlageflächen zwischen der Abdeckung und der Stirnseite der Aufnahme bereitgestellt.

Weitere Einzelheiten und vorteilhafte Ausgestaltungen der Erfindung sind der nachfolgenden Beschreibung zu entnehmen, anhand derer ein Ausführungsbeispiel der Erfindung näher beschrieben und erläutert ist.

Es zeigen:
- Figur 1: eine erfindungsgemäße Sensorhalterung in einer Vormontageposition;
- Figur 2: die Sensorhalterung gemäß Figur 1 mit eingesetztem Sensor; und
- Figur 3: die Sensorhalterung gemäß Figur 1 und 2 in einer Endmontageposition.

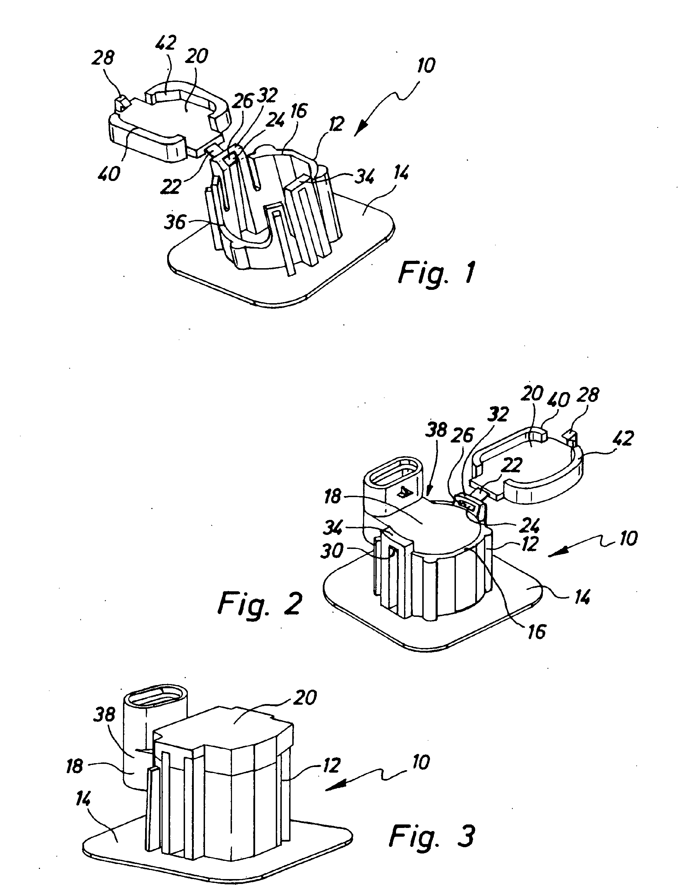

Die in den Figuren 1 bis 3 dargestellte Sensorhalterung 10 ist zur Halterung von Abstandssensoren an Fahrzeugteilen, und insbesondere an Stoßfängern, vorgesehen. Die Sensorhalterung 10 umfasst eine hülsenartige Aufnahme 12, die an ihrer axial vorderen Seite, in deren Bereich sich bei eingesetztem Sensor die aktive Fläche des Sensors befindet, offen ist. Auf der radial außen liegenden Seite der vorderen Seite der Aufnahme 12 ist ein Befestigungsabschnitt 14 vorhanden, der beispielsweise an dem Fahrzeugteil, an dem die Halterung 10 angeordnet werden soll, durch Kleben oder Schweißen befestigbar ist. Die Aufnahme 12 ist an ihrer hinteren Seite 16 in der in den Figuren 1 und 2 dargestellten Vormontageposition in axialer Richtung offen. Ein in den Figuren 2 und 3 dargestellter Sensor 18 kann dadurch von axial hinten in die Aufnahme 12 eingeführt werden.

Wie aus den Figuren deutlich wird, umfasst die Halterung 10 eine deckelartige Abdeckung 20, mit der in der Figur 3 dargestellten Endmontageposition die hintere Seite 16 der Aufnahme 12 abgedeckt wird. Die Abdeckung 20 ist dabei vorteilhafterweise aus Kunststoff und dient zur Dämpfung von im Betrieb des Sensors 18 auftretenden Sensorsignalen, die in die hintere Richtung abgestrahlt werden und/oder zur Dämpfung von aus der hinteren Richtung kommenden Reflexionssignalen. Es hat sich gezeigt, dass derartige Signale den Betrieb des Sensors 18 stören, wodurch sich ein ungenaues oder falsches Messsignal ergeben kann. Aufgrund des Vorsehens der in den Figuren dargestellten Abdeckung 20 ist ein störunanfälligeres Betreiben der Sensoren 18 möglich.

Die Abdeckung 20 ist dabei über ein elastisch nachgiebig ausgebildetes Verbindungselement 22 an der Aufnahme 12 angeordnet. Bei der Ausführungsform, die in den Figuren dargestellt ist, ist das Verbindungselement 22 als Art Filmscharnier einstückig an die Abdeckung 20 angeformt. Das der Aufnahme 12 zugewandte Ende des Verbindungselements 22 weist Hinterrastmittel 24 auf, die zur Befestigung der Abdeckung 20 an der Aufnahme 12 in eine an der Aufnahme 12 vorgesehene Rastaussparung 26 eingreifen.

Zur dauerhaften Befestigung der Abdeckung 20 in der in der Figur 3 dargestellten Endmontageposition ist an der Abdeckung 20 ein Befestigungsmittel 28 in Form eines Rasthakens vorgesehen. Der Rasthaken hintergreift in der geschlossenen Lage der Abdeckung 20 eine an der Aufnahme 12 vorgesehene Hinterrastkante 30.

Wie aus den Figuren deutlich wird, weist die eine geschlossene Mantelfläche aufweisende Aufnahme 12 an ihrer hinteren Seite 16 zwei in axialer Richtung weisende Vorsprünge 32, 34 auf, wobei am Vorsprung 32 die Rastaussparung 26 vorgesehen ist und am Vorsprung 34 die Hinterrastkante 30.

Wie aus insbesondere Figur 1 deutlich wird, weist die Mantelfläche der Aufnahme 12 eine sich in radialer Richtung erstreckende Aussparung 36 auf, die zur Aufnahme eines Anschlussabschnitts 38 des Sensors 18 dient. Die Anschlüsse des Sensors 18 werden folglich seitlich aus der Aufnahme 12 herausgeführt. Die Hinterseite 16 der Aufnahme 12 kann deshalb vollständig von der Abdeckung 20 abgedeckt werden.

Die Abdeckung 20 weist auf ihrer der hinteren Seite 16 zugewandten Seite zwei umlaufende Anlagestegabschnitte 40, 42 auf, die zur Anlage an die freie Stirnseite der Aufnahme 12 in der in der Figur 3 dargestellten Endmontageposition dienen.

Mittels der Abdeckung 20 wird in der in der Figur 3 dargestellten Endmontageposition der Sensor 18 in der Halterung befestigt; ein Herausnehmen des Sensors 18 nach axial hinten ist aufgrund des Vorhandenseins der Abdeckung 20 nicht möglich. Vorteilhafterweise wird der Sensor 18 von der Abdeckung 20 in seiner Endmontageposition unter axialer Vorspannung in der Aufnahme 12 gehalten.

## Patentansprüche

1. Sensorhalterung (10), insbesondere zur Halterung von Abstandssensoren an Fahrzeugteilen, mit einer Aufnahme (12) für einen Sensor (18), wobei die Aufnahme eine axial vordere Seite, in deren Bereich sich bei einem in die Halterung eingesetzten Sensor (18) die aktive Fläche des Sensors befindet und eine der vorderen Seite abgewandte hintere Seite (16) aufweist, wobei die Halterung eine angeordnete Abdeckung (20) umfasst, die zum Einführen des Sensors (18) in die Aufnahme (12) die hintere Seite (16) der Aufnahme (12) freigibt und bei in die Aufnahme (12) eingeführtem Sensor (18) die hintere Seite (16) abdeckt, **dadurch gekennzeichnet, dass** die hintere Seite (16) der Aufnahme (12) bei Vorhandensein eines Sensors (18) in der Halterung (10) zur Dämpfung von Sensorsignalen, die in die hintere Richtung abgestrahlt werden und/oder zur Dämpfung von aus der hinteren Richtung kommenden Reflektionssignalen mit der Abdeckung vollständig abgedeckt oder abdeckbar ist.

2. Sensorhalterung (10) nach Anspruch 1, **dadurch gekennzeichnet, dass** die Abdeckung (20) mittels eines elastisch nachgiebigen Verbindungselements (22) an der Aufnahme (12) angeordnet ist, wobei das Verbindungselement (22) an die Aufnahme (12) und/oder an die Abdeckung (20) angeformt sein kann.

3. Sensorhalterung (10) nach Anspruch 2, **dadurch gekennzeichnet, dass** das Verbindungselement (22) als Scharnier, insbesondere als Filmscharnier zur schwenkbaren Anordnung der Abdeckung (20) an der Aufnahme (12) angeordnet ist.

4. Sensorhalterung (10) nach Anspruch 2 oder 3, **dadurch gekennzeichnet, dass** das Verbindungselement (22) wenigstens ein freies Ende aufweist, an dem Hinterrastmittel (24) zur rastenden Verbindung mit einem Rasteingriffsabschnitt (26) an der Aufnahme (12) und/oder der Abdeckung (20) vorgesehen sind.

5. Sensorhalterung (10) nach einem der vorhergehenden Ansprüche, **dadurch gekennzeichnet, dass** an der Abdeckung (20) und/oder an der Aufnahme (12) Befestigungsmittel (22,28) zum dauerhaften Befestigen der Abdeckung (20) auf der hinteren Seite (16) der Aufnahme (12) vorgesehen sind.

6. Sensorhalterung (10) nach Anspruch 5, **dadurch gekennzeichnet, dass** die Befestigungsmittel (22,28) derart ausgebildet sind, dass die Abdeckung (20) unter axialer Vorspannung an der Aufnahme (12) angeordnet ist.

7. Sensorhalterung (10) nach Anspruch 5 oder 6, **dadurch gekennzeichnet, dass** die Aufnahme (12) an der hinteren Seite (16) wenigstens zwei in axialer Richtung weisende Vorsprünge (32,34) aufweist, die die Befestigungsmittel (22,28,30) zur Anordnung der Abdeckung (20) an der hinteren Seite (16) der Aufnahme (12) umfassen.

8. Sensorhalterung (10) nach einem der Ansprüche 5, 6 oder 7, **dadurch gekennzeichnet, dass** die Befestigungsmittel (28,30) als lösbare oder unlösbare Rastmittel ausgebildet sind.

9. Sensorhalterung (10) nach einem der vorhergehenden Ansprüche, **dadurch gekennzeichnet, dass** die Aufnahme (12) an einem Befestigungsabschnitt (14) der Halterung angeordnet ist

10. Sensorhalterung (10) nach einem der vorhergehenden Ansprüche, **dadurch gekennzeichnet, dass** die Mantelfläche der Aufnahme (12) im Wesentlichen geschlossen ist.

11. Sensorhalterung (10) nach Anspruch 9, **dadurch gekennzeichnet, dass** die Mantelfläche der Aufnahme (12) eine sich in radiale Richtung erstreckenden Aussparung (36) für einen Anschlussabschnitt (38) des Sensors (18) aufweist.

12. Sensorhalterung (10) nach einem der vorhergehenden Ansprüche, **dadurch gekennzeichnet, dass** die Abdeckung (20) wenigstens abschnittsweise einen umlaufenden Anlagesteg (40,42) zur Anlage an die freie Stirnseite der Aufnahme (12) aufweist.

## Claims

1. Sensor mount (10), in particular for mounting inter-vehicle distance sensors on vehicle components, having a receptacle (12) for a sensor (18), wherein the receptacle has an axially front side in the region of which the active face of the sensor is located when the sensor (18) is inserted into the mount, and a rear side (16) which is turned away from the front side, wherein the mount comprises an arranged cover (20), the cover opens the rear side (16) of the receptacle (12) for the insertion or the sensor (18) into the receptacle (12), and covers the rear side (16) when the sensor (18) is inserted into the receptacle (12), **characterized in that** when a sensor (18) is present in the mount (10) for the purpose of damping sensor signals which are emitted in the rear direction and/or for the purpose of damping reflection signals which come from the rear direction the rear side (16) of the receptacle (12) is or can be completely covered with the cover.

2. Sensor mount (10) according to Claim 1, **characterized in that** the cover (20) is arranged on the receptacle (12) by means of an elastic resilient connecting element (22), wherein the connecting element (22) can be integrally formed onto the receptacle (12) and/or onto the cover (20).

3. Sensor mount (10) according to Claim 2, **characterized in that** the connecting element (22) is arranged as a hinge, in particular as a film hinge, for pivotably arranging the cover (20) on the receptacle (12).

4. Sensor mount (10) according to Claim 2 or 3, **characterised in that** the connecting element (22) has at least one free end on which rear-engagement latching means (24) for forming a latching connection to a latching engagement section (26) are provided on the receptacle (12) and/or on the cover (20).

5. Sensor mount (10) according to one of the preceding claims, **characterized in that** attachment means (22, 28) for permanently attaching the cover (20) to the rear side (16) of the receptacle (12) are provided on the cover (20) and/or on the receptacle (12).

6. Sensor mount (10) according to Claim 5, **characterized** is that the attachment means (22, 28) are embodied in such a way that the cover (20) is arranged on the receptacle (12) with axial prestress.

7. Sensor mount (10) according to Claim 5 or 6, **characterized in that** the receptacle (12) has, on the rear side (16), at least two projections (32, 34) which point in the axial direction and which comprise the attachment means (22, 28, 30) for arranging the cover (20) on the rear side (16) of the receptacle (12).

8. Sensor mount (10) according to one of Claims 5, 6 or 7, **characterised in that** the attachment means (28, 30) are embodied as detachable or non-detachable latching means.

9. Sensor mount (10) according to one of the preceding claims, **characterized in that** the receptacle (12) is arranged on an attachment section (14) of the mount.

10. Sensor mount (10) according to one of the preceding claims, **characterized in that** the lateral surface of the receptacle (12) is essentially closed.

11. Sensor mount (10) according to Claim 9, **characterised in that** the lateral surface of the receptacle (12) has a cutout (36), extending in the radial direction, for a connecting section (38) of the sensor (18).

12. Sensor mount (10) according to one of the preceding claims, **characterised in that** the cover (20) has, at least in certain sections, a circumferential bearing web (40, 42) for bearing against the free end side of the receptacle (12).

## Revendications

1. Support de capteur (10), notamment pour maintenir des capteurs d'espacement sur des parties de véhicule, comprenant un réceptacle (12) destine à un capteur (18), le réceptacle comprenant un côté axialement avant dans la région duquel se trouve la surface active du capteur lorsqu'un capteur (18) est introduit dans le support et un côté arrière (16) qui est tourné dans la direction opposée au côté avant, le support comprenant un couvercle (20) qui dégage le côté arrière (16) du réceptacle (12) pour l'introduction du capteur (18) dans le réceptacle (12) et qui recouvre le côté arrière (16) lorsque le capteur (18) est inséré dans le réceptacle (12), **caractérisé en ce que** le côté arrière (16) du réceptacle (12) est ou peut être entièrement recouvert par le couvercle lorsqu'un capteur (18) est prévent dans le support (10) pour affaiblir des signaux de capteur qui sont rayonnés vers l'arrière et/ou pour affaiblir des signaux de réflexion provenant de la direction arrière.

2. Support de capteur (10) selon la revendication 1, **caractérisé en ce que** le couvercle (20) est disposé sur le réceptacle (12) au moyen d'un élément de liaison (22) déformable élastiquement, l'élément de liaison (22) pouvant être formé sur le réceptacle (12) et/ou le couvercle (20).

3. Support de capteur (10) selon la revendication 2, **caractérisé en ce que** l'élément de liaison (22) est disposé sous la forme d'une charnière, notamment d'un film charnière afin que le couvercle (20) puisse être relié de manière pivotante sur le réceptacle (12).

4. Support de capteur (10) selon la revendication 2 ou 3, **caractérisé en ce que** l'élément de liaison (22) présente au moins une extrémité libre sur laquelle sont prévus des moyens de détente arrière (24) pouvant être reliés par enclenchement à l'aide d'une section d'enclenchement (26) au réceptacle (12) et/ou au couvercle (20).

5. Support de capteur (10) selon l'une des revendications précédentes, **caractérisé en ce que** des moyens de fixation (22, 28) sont prévus sur le couvercle (20) et/ou sur le réceptacle (12) pour fixer de manière permanente le couvercle (20) au côté arrière (16) du réceptacle (12).

6. Support de capteur (10) selon la revendication 5, **caractérisé en ce que** les moyens de fixation (22, 28) sont réalisés de telle manière que le couvercle (20) soit mis en place sur le réceptacle (12) à l'état pré-contraint dans la direction axiale.

7. Support de capteur (10) selon la revendication 5 ou 6, **caractérisé en ce que** le réceptacle (12) comprend au moins deux protubérances (32, 34) dans la direction axiale sur le côté arrière (16), qui englobent les moyens de fixation (22, 28, 30) pour la mise en place du couvercle (20) sur le côté arrière (16) du réceptacle (12).

8. Support de capteur (10) selon l'une des revendications 5, 6 ou 7, **caractérisé en ce que** les moyens de fixation (28, 30) sont réalisés sous la forme de moyens de détente amovibles ou inamovibles.

9. Support de capteur (10) selon l'une des revendications précédentes, **caractérisé en ce que** le réceptacle (12) est disposé dans une section de fixation (14) du support.

10. Support de capteur (10) selon l'une des revendications précédentes, **caractérisé en ce que** la surface extérieure du réceptacle (12) est sensiblement fermée.

11. Support de capteur (10) selon la revendication 9, **caractérisé en ce que** la surface extérieure du réceptacle (12) présente un évidement s'étendant en direction radiale (36) pour une section de raccordement (38) du capteur (18).

12. Support de capteur (10) selon l'une des revendications précédentes, **caractérisé en ce que** le couvercle (20) présente au moins dans certaines sections une patte de support (40, 42) destinée à reposer sur la face libre du réceptacle (12).
